# EUROPEAN PATENT APPLICATION

(11) **EP 3 783 327 A1**
(43) Date of publication of application: **24.02.2021**
(21) Application number: 19192487.7
(22) Date of filing: 20.08.2019
(51) Int. Cl.: G01L 1/00

(54) **TRIBOELECTRIC-BASED FORCE/PRESSURE SENSOR**

(71) Applicant: SABIC Global Technologies B.V., 4612 PX Bergen op Zoom (NL)
(72) Inventor: TAYEB, Mohammed A., 23955-6900 Thuwal (SA); ALAKEL, Sahel, 23955-6900 Thuwal (SA); ALSALEM, Fahad Khalid, 23955-6900 Thuwal (SA); ALSHARIF, Yasir, 23955-6900 Thuwal (SA)
(74) Representative: Elzaburu S.L.P.

(57) **Abstract**

A force sensor includes a triboelectric sensor including: a substrate layer, an electrode layer, and at least a first triboelectric layer and a second triboelectric layer; and an electronics package configured to identify a force generated by pressure applied to the triboelectric sensor. The first triboelectric layer and the second triboelectric layer have opposing electronegativities.

## Description

### FIELD OF THE DISCLOSURE

The present disclosure relates to triboelectric sensors configured to identify a force generated by pressure applied to the triboelectric sensor.

### BACKGROUND OF THE DISCLOSURE

Force sensing technology is a prominent and well-studied field. There are numerous problems associated with conventional force/pressure sensing apparatuses, however. The most notable problems arising from such technologies include the physical size of the apparatus, device shape freedom mechanical flexibility, operational frequency range, and materials selection. The most common conventional force sensors are mechanical gauge, piezoelectric, capacitive, and resistive force sensors.

Mechanical gauge force sensors include hydraulic, pneumatic, and strain-based gauges. They are very accurate, rigid, and can be calibrated by the manufacturer. However, they are bulky, have numerous breakable pieces, and are relatively heavy.

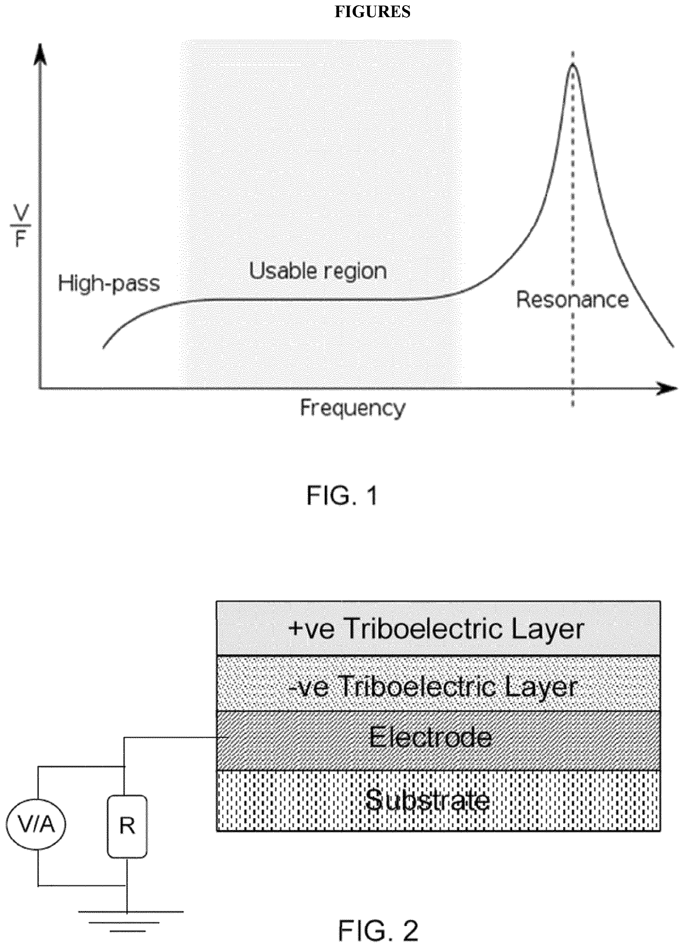

Piezoelectric force sensors can be thin and flexible, but they require inhouse calibration. In addition, they have a limited frequency range in which the sensor may be used. As depicted in FIG. 1, they have a narrow usable region; below this region there is a high-pass range in which voltage readings are attenuated and above this range voltage readings are inaccurate due to technological limitations.

Capacitive force sensors with touch capabilities can be used in displays. This technology is resilient to decomposition of the resistive material, and the sensors can thus have a long life if properly handled and can function through protective casings (i.e. a glass screens). However, they can only interact with dielectric or conductive materials - a smart phone screen, for example, will not work properly when used with most gloves.

Finally, resistive force sensors are conventional resistors that function on the concept of resistance change upon touch. They can be easily be integrated into circuitry and are relatively inexpensive, although the central resistive material requires time to inflate after being used. In addition, they provide a non-linear pressure response varying with environmental factors such as temperature and humidity, which reduces the chances of reproducibility. Furthermore, they are extremely fragile - if not correctly installed they will have an increased chance of malfunction with use.

Triboelectric force or pressure sensing is a promising field of research that has received scientific attention. Electrostatic charges are generated on the surface of a triboelectric layer upon friction and increases in a direct correlation to the amount of force applied onto the material. Triboelectric force sensing is, in effect, the reaction of a triboelectric material to the amount of force applied on it. There are many reports describing triboelectric materials that can provide high output voltage based on a material's intrinsic property, processing method, form factor, or device architecture. However, sensitivity and force threshold for triboelectric force sensing materials is an area that has not been fully explored.

These and other shortcomings are addressed by aspects of the disclosure.

### SUMMARY

A force sensor includes: a triboelectric including a substrate layer, an electrode layer, and at least a first triboelectric layer and a second triboelectric layer; and an electronics package configured to identify a force generated by pressure applied to the triboelectric sensor. The first triboelectric layer and the second triboelectric layer have opposing electronegativities.

A method for determining force applied to an object includes: incorporating a force sensor on the object; applying pressure to the force sensor; and determining the force generated by the pressure. The force sensor includes: a triboelectric sensor including a substrate layer, an electrode layer, and at least a first triboelectric layer and a second triboelectric layer; and an electronics package configured to identify a force generated by pressure applied to the triboelectric sensor. The first triboelectric layer and the second triboelectric layer have opposing electronegativities.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is an exemplary output graph for a conventional piezoelectric force sensor.
FIG. 2 is a schematic diagram of an exemplary triboelectric force sensor.
FIG. 3 is a schematic showing performance of the exemplary force sensor of FIG. 2.
FIG. 4 is a cross sectional view of a single electrode triboelectric force sensor with different positive triboelectric layers showing schematics of touch analysis (voltage response) at a fixed applied pressure.
FIG. 5 provides exemplary cross-sectional view of triboelectric force sensors according to aspects of the disclosure.
FIG. 6 illustrates an exemplary overall block diagram of a practical triboelectric-based force sensor.
FIGS. 7(a)-7(d) illustrate output waveforms for the force sensor.
FIG. 8 is a circuit schematic of an exemplary force sensor according to aspects of the disclosure.
FIG. 9 provides photographs of triboelectric sensors prepared according to aspects of the disclosure.
FIG. 10 illustrates a test force application device used in the examples of the present disclosure.
FIG. 11 is a voltage output recording from a triboelectric sensor according to aspects of the disclosure.
FIGS. 12(a)-12(d) are voltage output recordings for triboelectric sensors using different contact materials.
FIGS. 13(a)-13(c) are voltage output recordings for a triboelectric sensor at a constant force.
FIGS. 14(a) and 14(b) show average output voltage for a triboelectric sensor upon dynamic excitement.

### DETAILED DESCRIPTION

The present disclosure can be understood more readily by reference to the following detailed description of the disclosure and the Examples included therein. In various aspects, the present disclosure pertains to a triboelectric force sensor, including a triboelectric sensor including a substrate layer, an electrode layer, and at least a first triboelectric layer and a second triboelectric layer, and an electronics package configured to identify a force generated by pressure applied to the triboelectric sensor. The first triboelectric layer and the second triboelectric layer have opposing electronegativities.

The triboelectric force sensor addresses several of the existing problems described above while retaining many of the advantages. Unlike conventional technologies, the inventive solution can be made into any size with very little difficulty, which provides a significant advantage for a wide range of applications. The sensors can handle very large forces and due to their ease of manufacture and relative low cost, they can be marketed as a disposable force sensing solution. Moreover, they can detect different types of materials and different force levels, thus solving problems that many have faced with capacitive force sensors. In addition, they can sense force through a protective casing unlike conventional solutions. The potential applications for this sensor are limitless and could us used in numerous applications, including but not limited to mobile telecommunications devices, everything from phones, light or dimmer switches, and various household items.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a triboelectric polymer" includes mixtures of two or more triboelectric polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Force Sensor

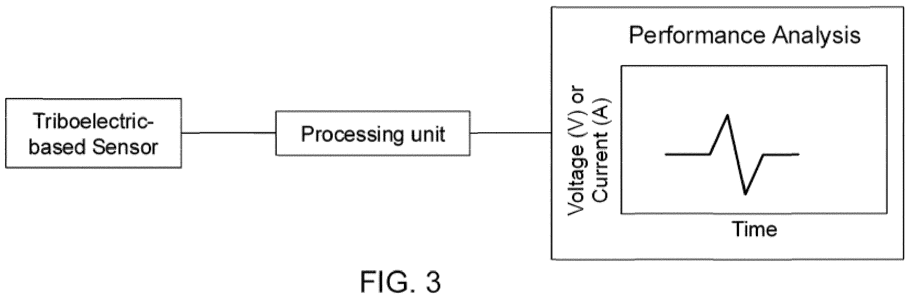

The mechanism of triboelectric technology is based on the coupling effects of triboelectric and electrostatic induction, as already known and well investigated. The charge density accumulated during a contact event increases with the applied mechanical pressure due to an increase in the contact area between corresponding active layers. Electrons are transferred due to the potential difference between the electrode and the ground in the forward and backward directions. FIG. 2 shows a schematic diagram of a single-electrode force sensor. The force levels are detected by measuring the current flows or the voltage drop across an electrical load (resistor and diode) connected to a bottom electrode. See also FIG. 3.

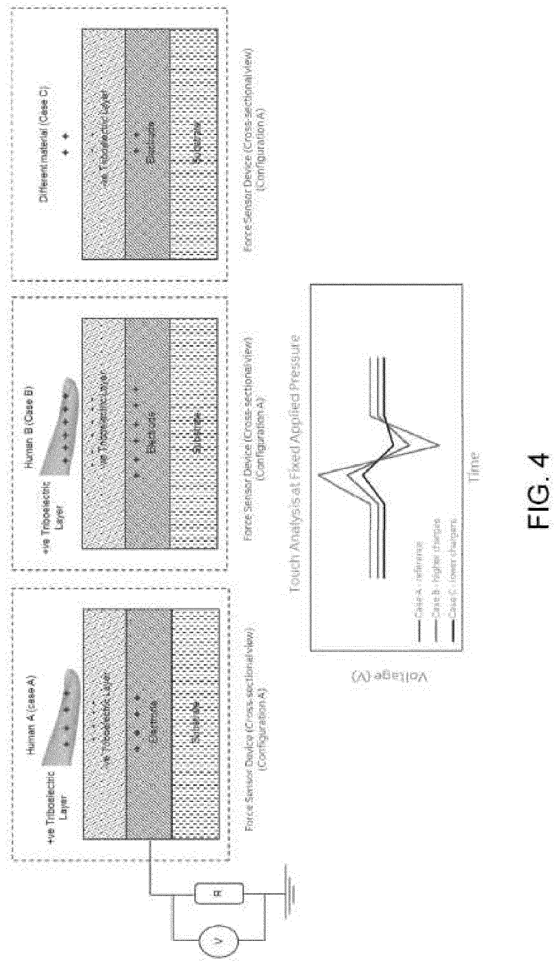

Typically, the prerequisite for a touch sensor is a voltage level that is set by the circuit/device requirement. At such point that the contact event delivers a voltage level at or higher than the threshold, the sensor will operate. However, a force sensor is vulnerable to many parameters because the output voltage is a function of the materials touching the sensor - the electropositive layer, frequency, area, and more importantly the applied force/pressure. Therefore, a single-electrode sensor design in which the negative triboelectric layer is the top-most layer of the sensor is not as practical or reliable as other designs as further illustrated in FIG. 4. As different persons/humans or materials touch the sensor having the negative triboelectric material as the top layer, different output responses are generated.

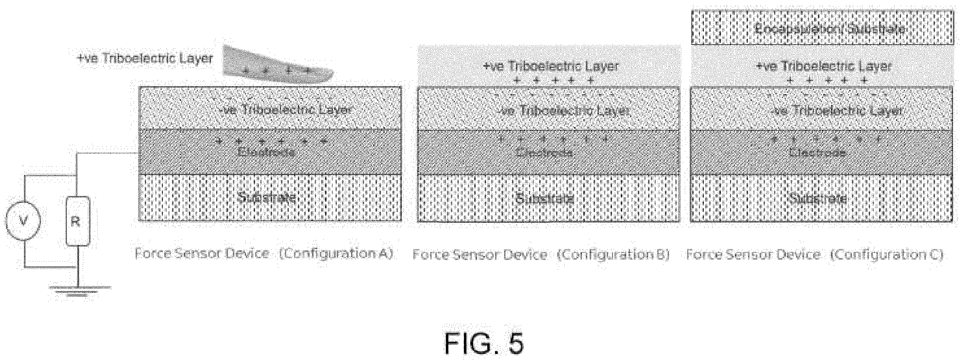

Accordingly, aspects of the disclosure relate to a single-electrode style triboelectric based force sensor including a negative triboelectric material in contact with a specific positive triboelectric material to measure voltage output as a function of the applied force/pressure. With reference to FIG. 5, various aspects of the force sensor may be included. In one aspect poly(vinylidenefluoride-co-trifluoroethylene) (PVDF-TrFE) is provided as a bottom negative triboelectric layer and poly(methyl methacrylate) (PMMA) is provided as a top positive triboelectric layer. Detailed sensitivity and capability data has been provided below for these active materials. However, this disclosure is not limited to just these two materials and any other combination of triboelectric positive and negative layers could be incorporated into a device as described herein to achieve force sensing.

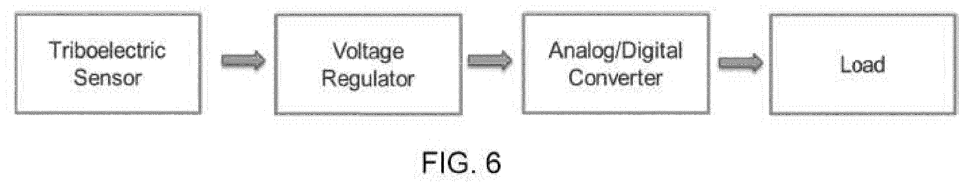

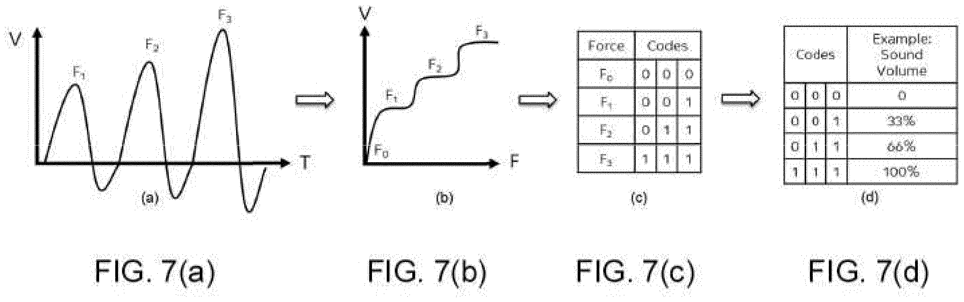

FIG. 6 illustrates an exemplary overall block diagram of a practical triboelectric-based force sensor. The sensor includes of four major blocks. The first block is the triboelectric force sensor that can generate pulses of voltage of different amplitudes based on the force exerted on its surface as shown in FIG. 7(a). This voltage is passed to a voltage regulator to smoothen the pulse and turn it into a flat voltage. Each level of voltage corresponds to a certain value of force as shown in FIG. 7(b). Finally, an analog to digital converter is used to convert the voltage into a digital signal, which then is used to control the load accordingly, such as light intensity (FIG. 7(c)) or sound volume (FIG. 7(d)).

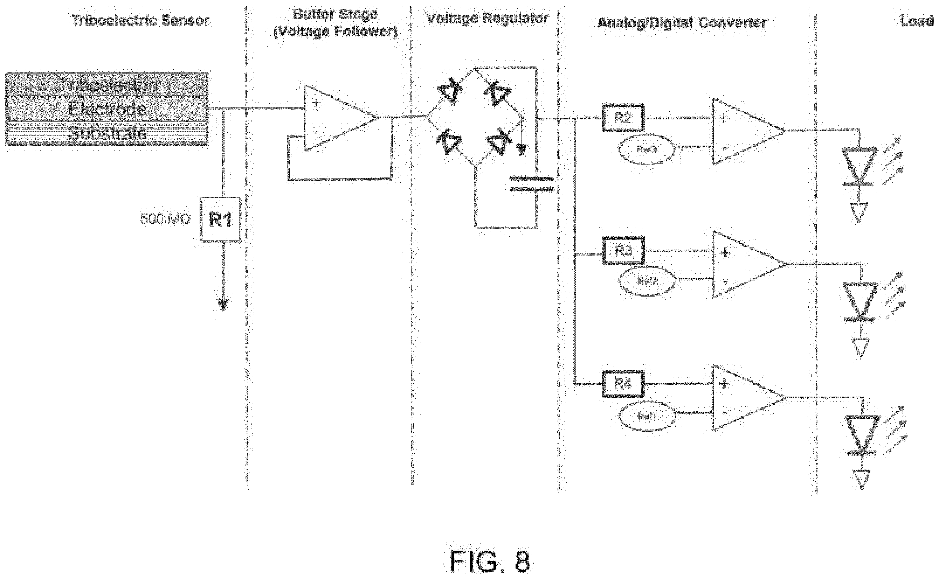

FIG. 8 shows an exemplary circuit schematic that turns on 3 LEDs in response to force exerted on the triboelectric sensor. The sensor has a resistor R1 (in this example 500 megaohm (MΩ)) connected to it. This is a relatively high resistor in this application, and as a result a buffer circuit (voltage follower) is included to enhance the resistance mismatch by increasing the total resistance seen by the sensor. This circuit further includes a full-wave bridge rectifier and a capacitor to smooth the voltage. The voltage is then digitalized using an analog to digital converter. Each digital code may correspond to a particular force value (see, e.g., FIGS. 7(c) and 7(d)). Finally, each code controls the switching of each LED connected at the output terminal of the circuit.

Aspects of the disclosure thus relate to a triboelectric sensor including: a substrate layer, an electrode layer, and at least a first triboelectric layer and a second triboelectric layer; and an electronics package configured to identify a force generated by pressure applied to the triboelectric sensor. The first triboelectric layer and the second triboelectric layer have opposing electronegativities.

In certain aspects the electronics package includes a resistor, a voltage regulator and an analog to digital converter. The electronics package may further include a diode.

In particular aspects the electronics package includes a load. The load may be configured to receive output from the analog to digital converter and operate a signal. In some aspects the signal is a light or a sound; intensity of the light or sound may vary according to intensity of the signal.

In some aspects one of the first triboelectric layer or the second triboelectric layer includes an electronegative triboelectric polymer. In particular aspects the electronegative triboelectric polymer includes poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof. In a specific aspect the electronegative triboelectric polymer includes PVDF-TrFE. The PVDF-TrFE may include from about 50 wt% to about 80 wt% polyvinylidene difluoride (PVDF) and from about 20 wt% to about 50 wt% trifluoroethylene.

In further aspects one of the first triboelectric layer and the second triboelectric layer includes an electronegative triboelectric polymer including cross-linkable polycarbonate including photoactive polycarbonate (XPC) and isofluoropropyl polyhedral oligomeric silsesquioxane (F-POSS).

XPC is a photoactive cross-linkable polycarbonate resin that includes about 0.5 mole % to about 5 mole % endcap groups derived from the monohydroxybenzophenone, including from about 1 mole % to about 3 mole, or from about 1.7 mole % to about 2.5 mole %, or from about 2 mole % to about 2.5 mole %, or from about 2.5 mole % to about 3.0 mole %, or from about 3.5 mole % to about 4.0 mole % endcap groups derived from the monohydroxybenzophenone. Most desirably, the monohydroxybenzophenone is 4-hydroxybenzophenone. In a particular aspect the resin includes about 3.5 mole % endcap groups derived from 4-hydroxybenzophenone, as shown in formula (1) below:

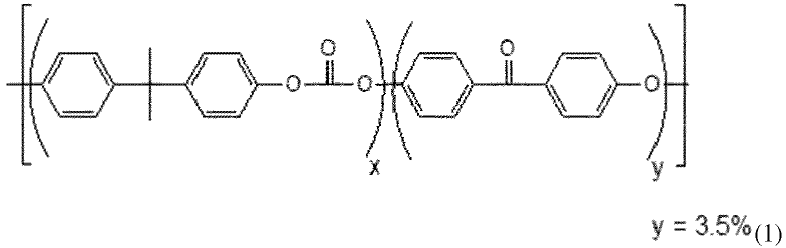

XPC may be formed in accordance with the methods described in U.S. Patent Publication No. 2017/0247507, the disclosure of which is incorporated herein by this reference in its entirety.

F-POSS is isofluoropropyl polyhedral oligomeric silsesquioxane, and has the chemical structure shown in formula (2):

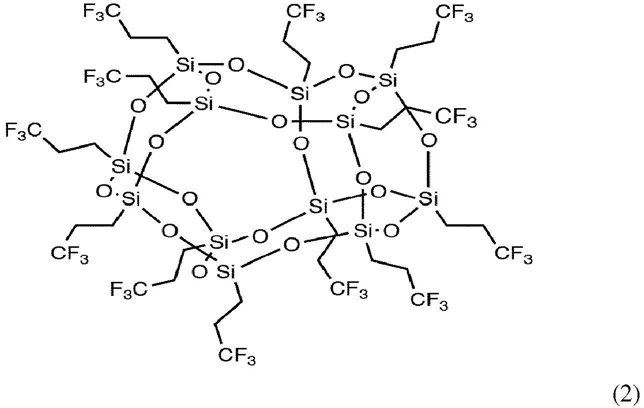

In yet further aspects the cross-linkable polycarbonate includes from about 70 wt% to about 99 wt% XPC and from about 1 wt% to about 30 wt% F-POSS.

One of the first triboelectric layer and the second triboelectric layers includes an electropositive triboelectric material. In some aspects the electropositive triboelectric material includes poly(methyl methacrylate) (PMMA), rubber, nylon, or a combination thereof.

In some aspects the substrate layer includes PMMA, glass, silicon, polyethylene naphthalate (PEN), polyethylene terephthalate (PET), polyetherimide (PEI), polycarbonate (PC), polyimide (PI), or a combination thereof.

The force sensor may be arranged in any suitable configuration. In one aspect the electrode layer overlies the substrate layer, the first triboelectric layer overlies the substrate layer and the second triboelectric layer overlies the first triboelectric layer. The first triboelectric layer may include the electronegative triboelectric material/polymer and the second triboelectric layer may include the electropositive triboelectric material.

In some aspects the force sensor includes a protective layer or an encapsulation to protect the various layers of the sensor. Exemplary materials for use in the protective layer or encapsulation include, but are not limited to, parylene (e.g., poly(p-xylylene) polymer), glass, polyimide (e.g., DuPont™ Kapton®), and combinations thereof.

The force sensor according to aspects of the disclosure offers shape and design freedom. It may be formed into a thin flexible film, resulting in lower manufacturing costs, providing the option for disposable sensors. In addition, it could be optically transparent, translucent, or opaque depending on the choice of materials. In some aspects the force sensor could be integrated into 3D structures and surfaces. In certain aspects the sensor may be self-powered. In yet further aspects the force sensor may be multifunctional, providing the ability to identify touch, applied force, and also the touching material.

The force sensor may be used in any suitable application, including but not limited to a touch screen, a mobile communication device, a watch, a keyboard, an automobile (window control button), an instrument (e.g., operating and control buttons), the Internet of things, a pressure sensor or a weight balance. For example, the force sensor could be incorporated into the sound-level control button on a mobile device. In another aspect the force sensor could be incorporated into a wearable device. In an automotive application the force sensor could operate a window or other aspect of the vehicle.

### Methods for Determining Force Applied to an Object

Aspects of the disclosure further relate to methods for determining force applied to an object, comprising: incorporating a force sensor on the object; applying pressure to the force sensor; and determining the force generated by the pressure. The force sensor includes a triboelectric sensor including: a substrate layer, an electrode layer, and at least a first triboelectric layer and a second triboelectric layer; and an electronics package configured to identify a force generated by pressure applied to the triboelectric sensor. The first triboelectric layer and the second triboelectric layer have opposing electronegativities. The force sensor of the method may include any of the components described herein.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A force sensor, comprising:
   a triboelectric sensor comprising a substrate layer, an electrode layer, and at least a first triboelectric layer and a second triboelectric layer, wherein the first triboelectric layer and the second triboelectric layer have opposing electronegativities; and
   an electronics package configured to identify a force generated by pressure applied to the triboelectric sensor.
Aspect 2. The force sensor according to Aspect 1, wherein the electronics package comprises a resistor, a voltage regulator and an analog to digital converter.
Aspect 3. The force sensor according to Aspect 2, wherein the electronics package further comprises a diode.
Aspect 4. The force sensor according to any of Aspects 1 to 3, wherein the electronics package further comprises a load, wherein the load is configured to receive output from the analog to digital converter and the load operates a signal.
Aspect 5. The force sensor according to Aspect 4, wherein the signal comprises a light or a sound, and wherein intensity of the light or sound varies according to intensity of the signal.
Aspect 6. The force sensor according to any of Aspects 1 to 5, wherein one of the first triboelectric layer or the second triboelectric layer comprises an electronegative triboelectric polymer comprising poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.
Aspect 7. The force sensor according to Aspect 6, wherein the electronegative triboelectric polymer comprises PVDF-TrFE and the PVDF-TrFE comprises from about 50 wt% to about 80 wt% polyvinylidene difluoride (PVDF) and from about 20 wt% to about 50 wt% trifluoroethylene.
Aspect 8. The force sensor according to any of Aspects 1 to 5, wherein one of the first triboelectric layer or the second triboelectric layer comprises an electronegative triboelectric polymer comprising cross-linkable polycarbonate comprising photoactive polycarbonate (XPC) and isofluoropropyl polyhedral oligomeric silsesquioxane (F-POSS).
Aspect 9. The force sensor according to Aspect 8, wherein the cross-linkable polycarbonate comprises from about 70 wt% to about 99 wt% XPC and from about 1 wt% to about 30 wt% F-POSS.
Aspect 10. The force sensor according to any of Aspects 6 to 9, wherein another of the first triboelectric layer or the second triboelectric layer comprises an electropositive triboelectric material comprising poly(methyl methacrylate) (PMMA), rubber, nylon, or a combination thereof.
Aspect 11. The force sensor according to any of Aspects 1 to 10, wherein the substrate layer comprises PMMA, glass, silicon, polyethylene naphthalate (PEN), polyethylene terephthalate (PET), polyetherimide (PEI), polycarbonate (PC), polyimide (PI), or a combination thereof.
Aspect 12. The force sensor according to any of Aspects 1 to 11, wherein the electrode layer overlies the substrate layer and the first triboelectric layer or the second triboelectric layer overlies the electrode layer.
Aspect 13. The force sensor according to any of Aspects 1 to 12, wherein the force sensor is incorporated into a touch screen, a mobile communication device, a watch, a keyboard, an automobile, or an instrument.
Aspect 14. A method for determining force applied to an object, comprising:
   incorporating a force sensor on the object, the force sensor comprising
      a triboelectric sensor comprising a substrate layer, an electrode layer, and at least a first triboelectric layer and a second triboelectric layer, wherein the first triboelectric layer and the second triboelectric layer have opposing electronegativities, and
      an electronics package configured to identify a force generated by pressure applied to the triboelectric sensor;
   applying pressure to the force sensor; and
   determining the force generated by the pressure.
Aspect 15. The method according to Aspect 14, wherein the object is a touch screen, a mobile communication device, a watch, a keyboard, an automobile, or an instrument.
Aspect 16. The method according to Aspect 14 or 15, wherein the electronics package comprises a resistor, a voltage regulator and an analog to digital converter.
Aspect 17. The method according to Aspect 16, wherein the electronics package further comprises a diode.
Aspect 18. The method according to any of Aspects 14 to 17, wherein one of the first triboelectric layer or the second triboelectric layer comprises an electronegative triboelectric polymer comprising poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.
Aspect 19. The method according to Aspect 18, wherein the electronegative triboelectric polymer comprises PVDF-TrFE and the PVDF-TrFE comprises from about 50 wt% to about 80 wt% polyvinylidene difluoride (PVDF) and from about 20 wt% to about 50 wt% trifluoroethylene.
Aspect 20. The method according to any of Aspects 14 to 17, wherein one of the first triboelectric layer or the second triboelectric layer comprises an electronegative triboelectric polymer comprising cross-linkable polycarbonate comprising photoactive polycarbonate (XPC) and isofluoropropyl polyhedral oligomeric silsesquioxane (F-POSS).
Aspect 21. The method according to Aspect 20, wherein the cross-linkable polycarbonate comprises from about 70 wt% to about 99 wt% XPC and from about 1 wt% to about 30 wt% F-POSS.
Aspect 22. The method according to any of Aspects 18 to 21, wherein another of the first triboelectric layer or the second triboelectric layer comprises an electropositive triboelectric material comprising poly(methyl methacrylate) (PMMA), rubber, nylon, or a combination thereof.
Aspect 23. The method according to any of Aspects 14 to 22, wherein the substrate layer comprises PMMA, glass, silicon, polyethylene naphthalate (PEN), polyethylene terephthalate (PET), polyetherimide (PEI), polycarbonate (PC), polyimide (PI), or a combination thereof.
Aspect 24. The method according to any of Aspects 14 to 23, wherein the electrode layer overlies the substrate layer and the first triboelectric layer or the second triboelectric layer overlies the electrode layer.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Sensor fabrication and Materials Synthesis

An exemplary method for forming an impact sensor is summarized in the following steps:
Step 1. Flexible and rigid substrate preparation and cleaning. Two substrates were used to fabricate various devices: glass (2.54x2.54 square centimeter (cm²)); and 125 µm thick Polyethylene naphthalate (PEN) (1-2.5 cm diameter). Each substrate was cleaned with acetone, isopropanol (IPA), and deionized water for 5 minutes in an ultrasonic bath, followed by blow-drying with high purity nitrogen.
Step 2. Electrode Deposition. Approximately 20 nanometer (nm) titanium/80 nm gold electrodes were deposited onto the substrates by electron beam evaporation and patterned in the desired geometry using a predesigned fabricated shadow mask (fabricated by laser cutter).
Step 3. Triboelectric layer deposition. 20 wt% PVDF-TrFE was dissolved in analytical grade dimethylformamide (DMF) and 10 wt% PMMA in dicloroethylene. The PVDF-TrFE copolymer included 70 wt% polyvinyldieneflouride and 30 wt% trifluoroethylene. The solutions were magnetically stirred at a temperature of about 50 °C until full dissolution was observed (about 2-4 hours). To prepare the various sensor configurations, the PVDF-TrFE solution was spin coated on the electrode-coated substrates at a fixed spin speed of 1000 rpm to obtain a roughly 16 micron (µm) thick film. The device was then cured in a vacuum oven for 2 hours at 50-60 °C and 50 millibar (mbar).

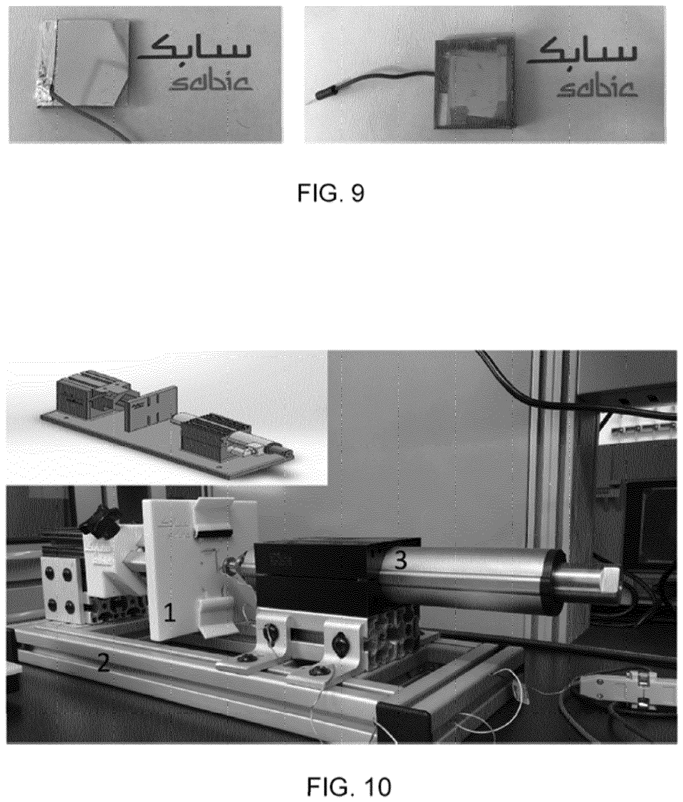

For sensor configurations B & C from FIG. 5, a PMMA solution was spin cast on top of the PVDF-TrFE triboelectric layer at 1500 RPM and cured at 60 °C for 2 hours to obtain an ∼13 µm thick film. For configuration C, a Parylene layer was deposited on top of the sensor by a Parylene chemical vapor deposition system (CVD) using 3 grams (g) of material, which resulted in a 0.6 µm thick film to protect the device. Another device with a modified configuration C was prepared with a spacer between the triboelectric-positive and triboelectric-negative layers. The spacer was made using double-sided tape attached to the four corners of the sensor. Finally, to protect the sensor against environmental conditions the device was sealed by applying a Kapton tape around the circumference of the substrate. FIG. 9 shows photographs of two sensors prepared.

### Triboelectric Force Sensor Characterization:

The voltage generated by the force sensor was obtained using a highly sensitive Keithley Sourcemeter 6430, which has the ability to supply and read voltage values. The device can record up to 75 data points per second in ideal conditions. Measurements were conducted as a function of force, achieved by varying the pressure (pressure = force/area) applied to the sensor/triboelectric layer using a custom built force application device (as shown in FIG. 10). A special case was designed and 3D printed with a sample holding plate (1), and support setup (2) to keep the linear motor (3) in a horizontal position as it was deemed the most fitting for the test application. The software package had full control of the linear motor. By changing the values of the current supplied, holding time (time at which the linear motor is applying force to the sample), frequency and shaft velocity (amongst others), the applied force values could be adjusted.

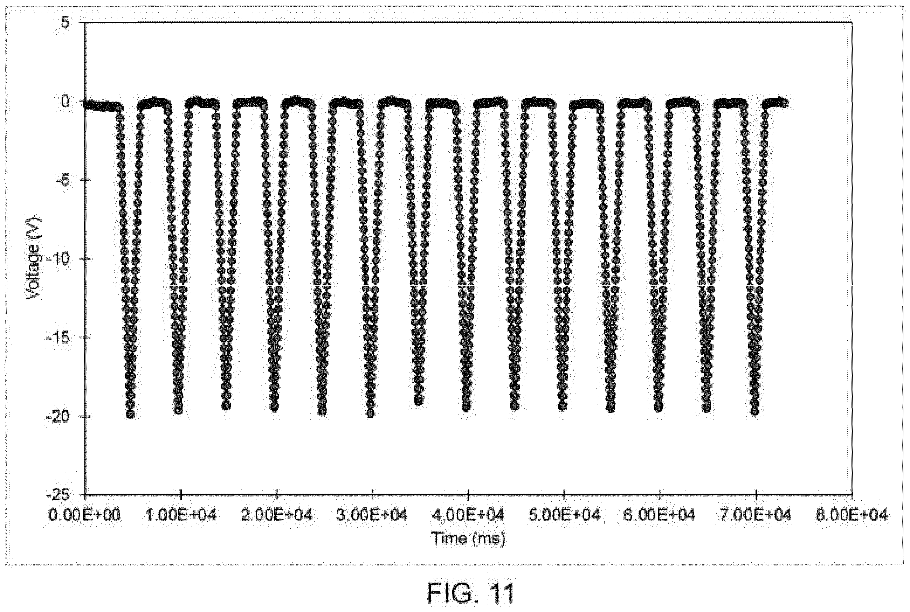

The output voltages from the samples were measured using the sourcemeter, accompanied with a custom design LabVIEW data logging program. The force applied to the triboelectric sensor was recorded using a separate inline Futek force sensor. Both the voltage and force measurements were recorded at the same time to simultaneously read their corresponding outputs. FIG. 11 shows a typical voltage output recording from the presented polymeric film/sensor ("Configuration C" with Parylene coating).

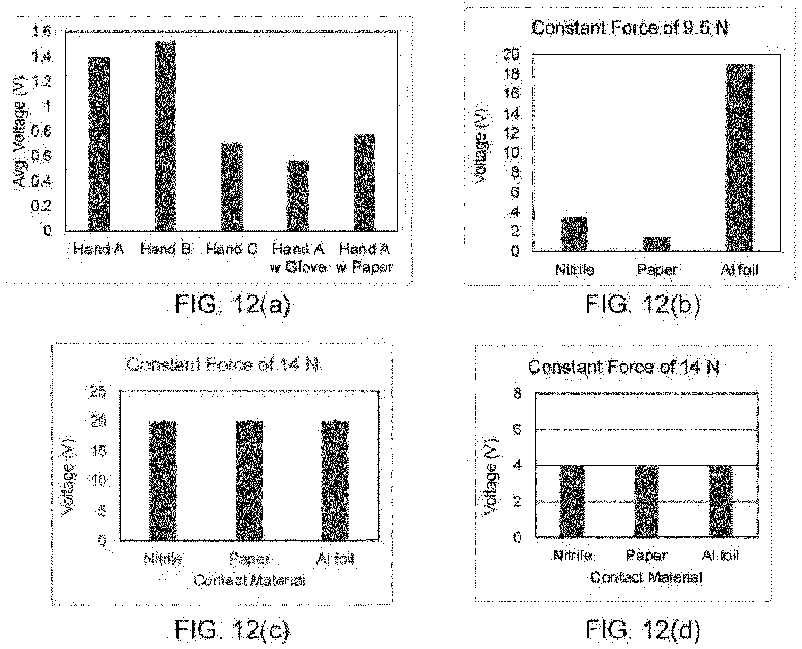

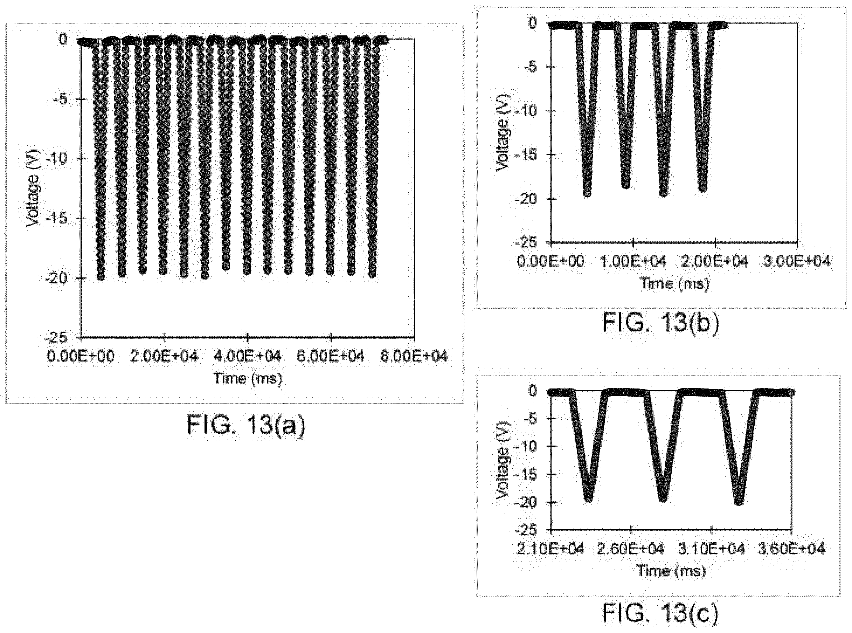

For the configuration C sensors having a Parylene coating or another glass as a protection/encapsulation substrate, the results (voltage output) were easily regenerated regardless of the contact materials, as shown in FIGS. 12(a)-12(d). FIG. 12 provides average voltage output recording from the presented sensors tested with different contact materials. FIG. 12(a) is Configuration A using human touches; FIG. 12(b) is Configuration B; FIG. 12(c) is Configuration C with a Parylene coating; FIG. 12(d) is Configuration C with a glass substrate protection and a spacer. The Configuration C sensor shows not only immunity towards contact surface (materials initiating the touch event) but also reproducible results at different timings - as shown in FIGS. 13(a)-13(c), a voltage output recording with a constant force of around 14 N.

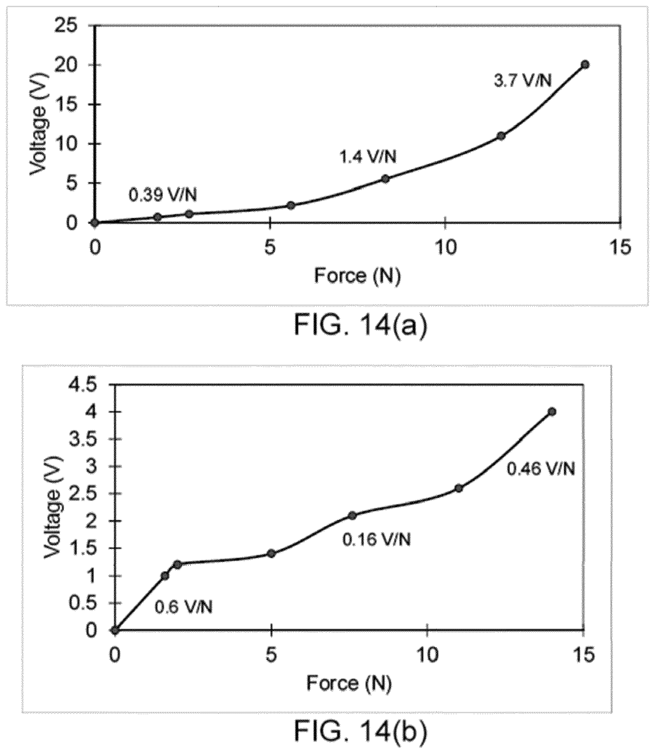

FIGS. 14(a) and 14(b) show average output voltage for a polymeric film/sensor upon dynamic excitement when using PVDF-TrFE as the negative triboelectric layer and PMMA as the positive triboelectric layer with a Parylene coating (FIG 14(a)) and a spacer and dual glass substrates (FIG. 14(b)), under variable applied force from 0.1N to 14N. The results illustrate that the output performance is negatively impacted by protecting the device with another rigid substrate which is believed to prevent some deformation during contact which in turn reduces the contact area between the positive and negative triboelectric layers. The Configuration C sensor with a protective Parylene layer shows a higher voltage performance with the application of 14 N, as shown in FIG. 14(b). In addition, such sensors show variable pressure sensitivity with a minimum of around 0.15 V/N.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A force sensor, comprising:
a triboelectric sensor comprising a substrate layer, an electrode layer, and at least a first triboelectric layer and a second triboelectric layer, wherein the first triboelectric layer and the second triboelectric layer have opposing electronegativities; and
an electronics package configured to identify a force generated by pressure applied to the triboelectric sensor.

2. The force sensor according to claim 1, wherein the electronics package comprises a resistor, a voltage regulator and an analog to digital converter.

3. The force sensor according to claim 2, wherein the electronics package further comprises a diode.

4. The force sensor according to any of claims 1 to 3, wherein the electronics package further comprises a load, wherein the load is configured to receive output from the analog to digital converter and the load operates a signal.

5. The force sensor according to claim 4, wherein the signal comprises a light or a sound, and wherein intensity of the light or sound varies according to intensity of the signal.

6. The force sensor according to any of claims 1 to 5, wherein one of the first triboelectric layer or the second triboelectric layer comprises an electronegative triboelectric polymer comprising poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

7. The force sensor according to claim 6, wherein the electronegative triboelectric polymer comprises PVDF-TrFE and the PVDF-TrFE comprises from about 50 wt% to about 80 wt% polyvinylidene difluoride (PVDF) and from about 20 wt% to about 50 wt% trifluoroethylene.

8. The force sensor according to any of claims 1 to 5, wherein one of the first triboelectric layer or the second triboelectric layer comprises an electronegative triboelectric polymer comprising cross-linkable polycarbonate comprising photoactive polycarbonate (XPC) and isofluoropropyl polyhedral oligomeric silsesquioxane (F-POSS).

9. The force sensor according to claim 8, wherein the cross-linkable polycarbonate comprises from about 70 wt% to about 99 wt% XPC and from about 1 wt% to about 30 wt% F-POSS.

10. The force sensor according to any of claims 6 to 9, wherein another of the first triboelectric layer or the second triboelectric layer comprises an electropositive triboelectric material comprising poly(methyl methacrylate) (PMMA), rubber, nylon, or a combination thereof.

11. The force sensor according to any of claims 1 to 10, wherein the substrate layer comprises PMMA, glass, silicon, polyethylene naphthalate (PEN), polyethylene terephthalate (PET), polyetherimide (PEI), polycarbonate (PC), polyimide (PI), or a combination thereof.

12. The force sensor according to any of claims 1 to 11, wherein the electrode layer overlies the substrate layer and the first triboelectric layer or the second triboelectric layer overlies the electrode layer.

13. The force sensor according to any of claims 1 to 12, wherein the force sensor is incorporated into a touch screen, a mobile communication device, a watch, a keyboard, an automobile, or an instrument.

14. A method for determining force applied to an object, comprising:
incorporating a force sensor on the object, the force sensor comprising
a triboelectric sensor comprising a substrate layer, an electrode layer, and at least a first triboelectric layer and a second triboelectric layer, wherein the first triboelectric layer and the second triboelectric layer have opposing electronegativities, and
an electronics package configured to identify a force generated by pressure applied to the triboelectric sensor;
applying pressure to the force sensor; and
determining the force generated by the pressure.

15. The method according to claim 14, wherein the object is a touch screen, a mobile communication device, a watch, a keyboard, an automobile, or an instrument.
